# EUROPÄISCHE PATENTSCHRIFT

(11) **EP 0 756 256 B1**
(45) Veröffentlichungstag und Bekanntmachung des Hinweises auf die Patenterteilung: **04.10.2001**
(21) Anmeldenummer: 96111333.9
(22) Anmeldetag: 13.07.1996
(51) Int. Cl.: G08B 13/24

(54) **Verfahren und Vorrichtung zur Herstellung von deaktivierbaren Sicherungsstreifen**
Method and device for manufacturing deactivatable security tags
Procédé et dispositif pour fabriquer des étiquettes de sécurité désactivables

(30) Priorität: 27.07.1995 DE 19527405
(43) Veröffentlichungstag der Anmeldung: 29.01.1997
(73) Patentinhaber: Meto International GmbH, 69434 Hirschhorn/Neckar (DE)
(72) Erfinder: Robertson, Paul Dr., Herts SG8 8QZ (GB); Fisher, John, Royston, Herts SG8 5SG (GB); Houzego, Peter, Cambs CB4 5AD (GB); Klassen, Gordon, 69221 Dossenheim (DE)
(74) Vertreter: Menges, Rolf, Dipl.-Ing.

(56) Entgegenhaltungen:
- EP-A- 0 085 418
- EP-A- 0 122 326
- EP-A- 0 578 992
- DE-A- 4 042 442
- DE-A- 4 129 693
- DE-A- 4 238 145

## Beschreibung

Die Erfindung betrifft ein Verfahren und eine Vorrichtung zur Herstellung von deaktivierbaren Sicherungsstreifen, insbesondere für die Artikelsicherung in Warenhäusern, wobei ein deaktivierbarer Sicherungsstreifen aus einem weichmagnetischen Bandmaterial besteht, auf das in definierten Abständen Abschnitte bestimmter Länge aus einem halbhart- oder hartmagnetischen Material aufgebracht sind.

Deaktivierbare Sicherungsstreifen werden in steigendem Maße in Warenhäusern zur Artikelsicherung eingesetzt. Wie bereits gesagt, bestehen sie aus einem weichmagnetischen Bandmaterial, auf dem bzw. in dessen Nähe halbhart- oder hartmagnetische Abschnitte angeordnet werden.
Das weichmagnetische, aktivierbare Material (z.B. Permalloy) zeichnet sich durch eine hohe Permeabiliät und eine geringe Koerzitivkraft aus und wird in der Überwachungszone des Ein/Ausgangsbereich eines Warenhauses durch ein magnetisches Wechselfeld zur Ausstrahlung eines charakteristischen Signals angeregt. Dieses Signal wird nachfolgend von einer im Frequenzbereich des Signals empfindlichen Detektoreinrichtung erfaßt und als Identifizierungssignal für eine in unerlaubter Weise die Überwachungszone passierende Ware ausgewertet; ein Alarm wird ausgelöst.

Selbstverständlich soll die Detektoreinrichtung nicht mehr ansprechen, sobald die Ware ordnungsgemäß bezahlt worden ist. Diesem Zwecke dienen die halbhart- oder hartmagnetischen streifenförmigen Abschnitte. Halbhart- oder hartmagnetisches Material besitzt die entgegengesetzten Eigenschaften von weichmagnetischem Material: es zeichnet sich durch eine niedrige Permeabilität und eine hohe Koerzitivkraft aus. Infolge der hohen Koerzitivkraft wird das Deativatormaterial im nicht-deaktivierten Zustand durch das magnetische Wechselfeld in der Überwachungszone nicht beeinflußt. Sobald das Deaktivatormaterial jedoch durch ein entsprechend hohes Magnetfeld in die Sättigung getrieben wird - was nach ordnungsgemäßer Bezahlung der Ware erfolgt - unterbindet seine Magnetisierung eine Reaktion des weichmagnetischen Materials auf das magnetische Wechselfeld in der Überwachungszone.

Deaktivierbare Sicherungselemente werden in großen Stückzahlen verwendet. Da jedes Sicherungselement üblicherweise nur einmal zur Artikelsicherung eingesetzt wird, liegt ein besonderes Augenmerk auf einer kostengünstigen Fertigung.
Aus der DE 42 23 394 A1 ist bereits ein Verfahren zur Herstellung von Sicherungsetiketten bekannt geworden, das die folgenden Fertigungsschritte umfaßt: auf ein nicht-metallisches Band werden ein hartmagnetischer Metallstreifen und danach auf den Metallstreifen eine elastische Trägerfolie aufgeklebt. Die Trägerfolie ist derart dick und flexibel, daß die Deformation des Metallstreifen durch ein rotierendes Stanzmesser ausreichend ist, um den Metallstreifen in einzelne Abschnitte zu trennen. Die herausgetrennten Abschnitte des Metallstreifens und des nicht-metallischen Bandes werden von der Trägerfolie abgezogen, und auf die verbleibenden Teile des Metallstreifens wird anschließend ein weichmagnetisches Band aufgebracht. Um ein fertiges Etikettenband herzustellen, wird - wie allgemein üblich - auf eine Seite des Bandes Etikettenpapier und auf die andere Seite ein Trägerband aufgeklebt.

Zweifellos ist dieses bekanntgewordene Verfahren bestens für die Bereitstellung hoher Stückzahlen von Sicherungselementen geeignet. Weniger zufriedenstellend ist jedoch der relativ hohe Anteil von halbhart- oder hartmagnetischem Material, das durch den Stanzprozeß verlustig geht

Aus der EP-A-0 122 326 ist ein Verfahren zur Herstellung deaktivierbarer Sicherungselemente bekannt, bei dem auf einem weichmagnetischen Bandmaterial Abschnitte eines hartmagnetischen Materials aufgebracht werden, wobei das hartmagnetische Material gekrümmt wird.

Der Erfindung liegt die Aufgabe zugrunde, ein Verfahren nach dem Oberbegriff des Anspruchs 1 und eine Vorrichtung nach dem Oberbegriff des Anspruchs 5 vorzuschlagen, wobei die krümmung zur Trennung benützt wird.

Die Aufgabe wird durch die Merkmale der Ansprüche 1 und 5 gelöst.

Prinzipiell bieten sich zwei alternative Möglichkeiten an, die Krümmung des halbhart- oder hartmagnetischen Bandmaterials zu erreichen: entweder erfolgt die Krümmung des halbhart- oder hartmagnetischen Bandmaterials schrittweise oder aber kontinuierlich, wobei die zweite Möglichkeit besonders hohe Arbeitsgeschwindigkeiten für das erfindungsgemäße Verfahren eröffnet.

Das erfindungsgemäße Verfahren benützt halbhart- oder hartmagnetische Bandmaterial, das spröde ist. Als Beispiel für ein Material, das eine hohe Sprödigkeit besitzt, ist Vacozet zu nennen. Bei einem spröden Material genügt es, die Krümmung so zu bemessen, daß das Bandmaterial infolge seiner Sprödigkeit, vorzugsweise im Bereich der stärksten Krümmung, bricht. Um die Prozeßgeschwindigkeit zu erhöhen, kann eine bewegbare Schneide die Unterteilung des Bandmaterials in einzelne Abschnitte unterstützten.

Als besonders vorteilhaft ist die Ausbildung des erfindungsgemäßen Verfahrens zu erachten, wobei die halbhart- oder hartmagnetische Abschnitte nachfolgend unmittelbar auf das weichmagnetische Bandmaterial aufgeklebt werden. Abgesehen von Materialeinsparungen lassen sich mittels dieser Weiterbildung des Verfahrens sehr dünne Sicherungselemente bzw. Etiketten fertigen. Besonders vorteilhaft wirkt sich die geringe Dicke der Sicherungselemente bei der sog. Quellenintegration aus, wenn also die Sicherungselemente in die zu sichernde Ware eingefügt werden.

Gemäß einer vorteilhaften Weiterbildung der erfindungsgemäßen Vorrichtung ist vorgesehen, daß an dem ersten Walzenpaar ein Mechanismus vorgesehen ist, der eine Unterteilung des halbhart-oder hartmagnetischen Bandmaterials in einzelne Abschnitte erlaubt, und daß die Steuervorrichtung die relative Drehgeschwindigkeit der beiden Walzenpaare derart bemißt, daß zwischen zwei aufeinanderfolgenden halbhart- oder hartmagnetischen Abschnitten der gewünschte Abstand erreicht wird. Vorzugsweise besteht der Mechanismus an dem Walzenpaar aus mindestens einer auf dem Mantel einer der beiden Walzen angeordneten Ausbuchtung und zumindest einer komplementären Ausnehmung im Mantel der anderen Walze des Walzenpaares. Diese einfache Ausgestaltung des Mechanismus' ist völlig ausreichend, falls das halbhart- oder hartmagnetische Bandmaterial eine genügend hohe Sprödigkeit aufweist.

Eine alternative Ausgestaltung der erfindungsgemäßen Vorrichtung beruht darauf, daß der Abstand zwischen den beiden Walzenpaaren kleiner als die doppelte Länge eines halbhart- oder hartmagnetischen Abschnitts ist, und daß die Rechen/Regeleinrichtung die beiden Walzen derart antreibt, daß im Falle der Verwendung eines spröden, halbhart- oder hartmagnetische Bandmaterials dieses zwischen den beiden Walzenpaaren derart stark gebogen wird, daß es im Bereich der stärksten Krümmung bricht.

Um die gewünschte Krümmung im Bereich zwischen den beiden Walzenpaaren zu erreichen, beaufschlagt die Rechen/Regeleinrichtung die Antriebe der beiden Walzenpaare sukzessive folgendermaßen: das erste Walzenpaar wird beaufschlagt, bis das halbhart- oder hartmagnetische Bandmaterial den Spalt zwischen den beiden Walzen des zweiten Walzenpaares erreicht; anschließend werden beide Walzenpaare angetrieben, bis das halbhart- oder hartmagnetische Bandmaterial in dem Spalt zwischen den beiden Walzen des zweiten Walzenpaares ergriffen wird; daraufhin wird das erste Walzenpaar beaufschlagt, bis das halbhart- oder hartmagnetische Bandmaterial zwischen den beiden Walzenpaaren eine gewünschte Krümmung aufweist und getrennt wird; in einem letzten Schritt wird das zweite Walzenpaar solange gedreht, bis der gewünschte Abstand zwischen zwei aufeinanderfolgenden Abschnitten erreicht ist.

Es ist darüber hinaus vorteilhaft, die korrekte Krümmung des Bandmaterials bei beiden zuvorbeschriebenen, alternativen Ausgestaltungen der erfindungsgemäßen Vorrichtung durch ein oberhalb des Krümmungsscheitels angeordnetes spitzwinkliges Element, in das das halbhart- oder hartmagnetische Bandmaterial hineingedrückt wird, zu unterstützen.

Eine besonders einfache Betätigung der Schneide wird mittels eines Selenoids erreicht, der von der Rechen-/Regeleinrichtung betätigt wird, sobald das Bandmaterial die gewünschte Krümmung erreicht hat.

Gemäß einer vorteilhaften Weiterbildung der erfindungsgemäßen Vorrichtung läßt sich die Präzision bei der Erstellung der Abschnitte aus halbhart- oder hartmagnetischem Material dadurch erhöhen, daß anstelle der intermittierend arbeitenden Schneide ein zwischen den beiden Walzenpaaren angeordnetes weiteres Walzenpaar tritt. Eine der beiden Walzen dieses Walzenpaares weist auf ihrem Mantel zumindest eine Ausbuchtung auf, während im Mantel der anderen Walze an entsprechender Stelle eine komplementäre Ausnehmung vorgesehen ist. Durch diese Kombination von Ausbuchtung und Ausnehmung wird gleichfalls ein Mechanismus geschaffen, der die Krümmung und-Unterteilung des halbhart- oder hartmagnetischen Bandmaterials bewirkt.

Die Erfindung wird anhand der nachfolgenden Figuren näher erläutert. Es zeigt:
Fig.1: eine perspektivische Darstellung eines deaktivierbaren Sicherungsstreifens,
Fig.2: eine schematische Darstellung eines Fertigungsprozesses für Sicherungsstreifen, in den die erfindungsgemäße Vorrichtung bzw. das erfindungsgemäße Verfahren integriert ist,
Fig.3: eine Ausführungsform der erfindungsgemäßen Vorrichtung,
Fig.4: eine zweite Ausführungsform der erfindungsgemäßen Vorrichtung,
Fig.4a: ein Flußdiagramm zur Ansteuerung der Rechen/Regeleinrichtung 19 für die in Fig.4 gezeigte Vorrichtung und
Fig. 5: eine dritte Ausführungsform der erfindungsgemäßen Vorrichtung.

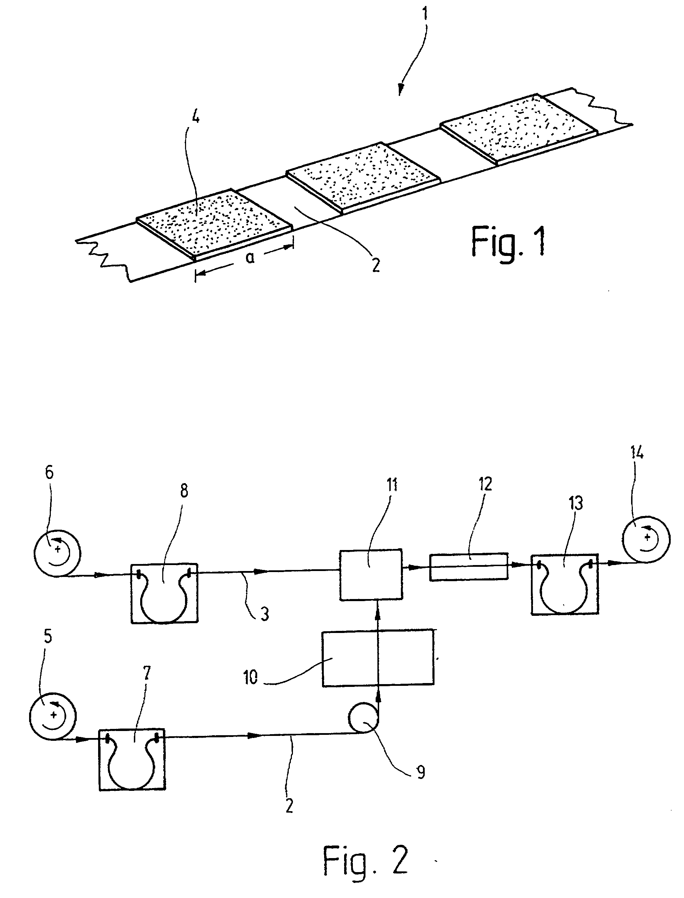

In Fig.1 ist eine perspektivische Darstellung eines deaktivierbaren Sicherungsstreifens 1 zu sehen. Der deaktivierbare Sicherungsstreifen 1 besteht aus einem weichmagnetischen Bandmaterial 2 auf das im Abstand b Abschnitte 4 der Länge a aufgebracht sind. Die Abschnitte 4 sind aus einem halbhart- oder hartmagnetischem Bandmaterial 3 nach dem erfindungsgemäßen Verfahren gefertigt.

Fig.2 zeigt eine schematische Darstellung eines Fertigungsprozesses für einen Sicherungsstreifen. In diesen Fertigungsprozeß ist die erfindungsgemäße Vorrichtung bzw. das erfindungsgemäße Verfahren integriert.
Das weichmagnetische Bandmaterial 2 wird von einer Rolle 5 abgespult und in einer Puffereinrichtung 7 gespeichert. Über eine Umlenkwalze 9 wird das weichmagnetische Bandmaterial 2 in die Vorrichtung 10 geführt. In dieser Vorrichtung 10 wird eine Seite des weichmagnetischen Bandmaterials 2 mit Klebstoff beschichtet.
Das halbhart- oder hartmagnetische Bandmaterial 3 wird gleichfalls von einer Rolle 6 abgewickelt und in einer Puffereinrichtung 8 gespeichert. In der erfindungsgemäßen Vorrichtung 11 wird das halbhart- oder hartmagnetische Bandmaterial 3 in einzelne Abschnitte 4 unterteilt und anschließend im Abstand b auf das weichmagnetische Bandmaterial 2 aufgeklebt. Im Trockner 12 wird der Sicherungsstreifen 1 getrocknet; letztlich wird der getrocknete Sicherungsstreifen 1 auf die Rolle 14 aufgewickelt, wobei wiederum eine Puffereinrichtung 13 zwischengeschaltet ist, die Unterschiede in der auf den Sicherungsstreifen wirkenden Zugspannung ausgleicht.

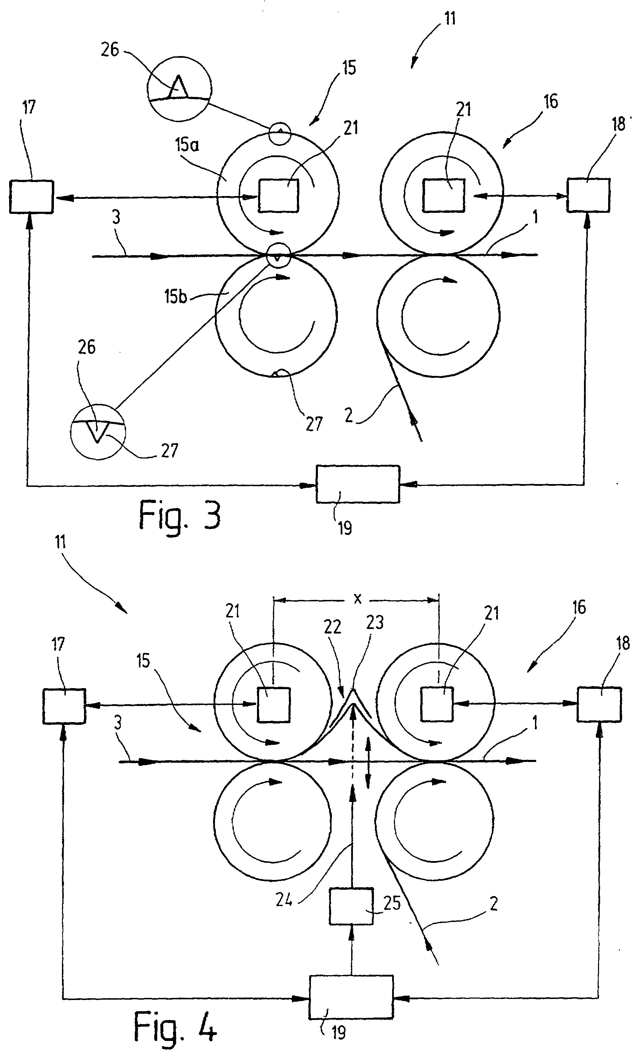

In Fig.3 ist eine erste Ausführungsform der erfindungsgemäßen Vorrichtung 11 dargestellt. Die Vorrichtung besteht aus zwei Walzenpaaren 15,16, wobei das erste Walzenpaar 15 zwei Mechanismen 26, 27 zur Unterteilung des halbhart- oder hartmagnetischen Bandmaterials 3 aufweist. Die beiden Walzen 15a, 15b; 16a, 16b eines Walzenpaares 15, 16 sind über in der Zeichnung nicht gesondert dargestellte Zahnräder miteinander gekoppelt.
Ein Mechanismus 26, 27 setzt sich zusammen aus einer Ausbuchtung 26, die auf dem Mantel der Walze 15a angeordnet ist, und aus einer an ansprechender Stelle im Mantel der Walze 15b angebrachten komplementären Ausnehmung 27. Durch den Mechanismus 26, 27 wird das halbhart- oder hartmagnetische Bandmaterial 3 gekrümmt und in Abschnitte 4 einer vorgegebenen Länge a unterteilt.

Jedem Walzenpaar 15, 16 ist ein Drehwinkelgeber 21 zugeordnet, der der Rechen-/Regeleinrichtung 19 Information über die Winkelstellung bzw. über die Winkelgeschwindigkeit der beiden Walzenpaare 15, 16 bereitstellt. Über die Antriebe 17, 19 regelt die Rechen-/Regeleinrichtung 19 die relative Winkelgeschwindigkeit der beiden Walzenpaare 15, 16 derart, daß die Abschnitte 4 mit der Länge a = Π•r (r: Radius der Walze 15a, 15b) im Abstand b auf das weichmagnetische Bandmaterial 2 aufgeklebt werden. Der Abstand b ist üblicherweise ein Bruchteil der Länge a des Abschnitts 4. Um die korrekte relative Winkelgeschwindigkeit der beiden Walzenpaare 15, 16 berechnen zu können, wird der Rechen-/Regeleinrichtung 19 über eine zugeordnete Eingabeeinrichtung die Information über die Länge a des Abschnitts 4, den Abstand b zwischen zwei aufeinanderfolgenden Abschnitten 4 und die Winkelgeschwindigkeit des Walzenpaares 15 bereitgestellt. Projiziert auf den Umfang einer Walze 15a, 15b, 16a, 16b, entspricht der Länge a bzw. dem Abstand b ein gewisser Drehwinkel α bzw. β. Daher läßt sich der gewünschte Abstand zwischen zwei aufeinanderfolgenden Abschnitten 4 erreichen, wenn das Walzenpaares 16 um den Winkel α+β in derselben Zeit gedreht wird wie das Walzenpaar 15 um den Winkel α. Die Rechen/Regeleinrichtung errechnet die erforderliche Winkelgeschwindigkeit des Walzenpaares 16 und regelt den Antrieb 18 entsprechend der errechneten Drehgeschwindigkeit.

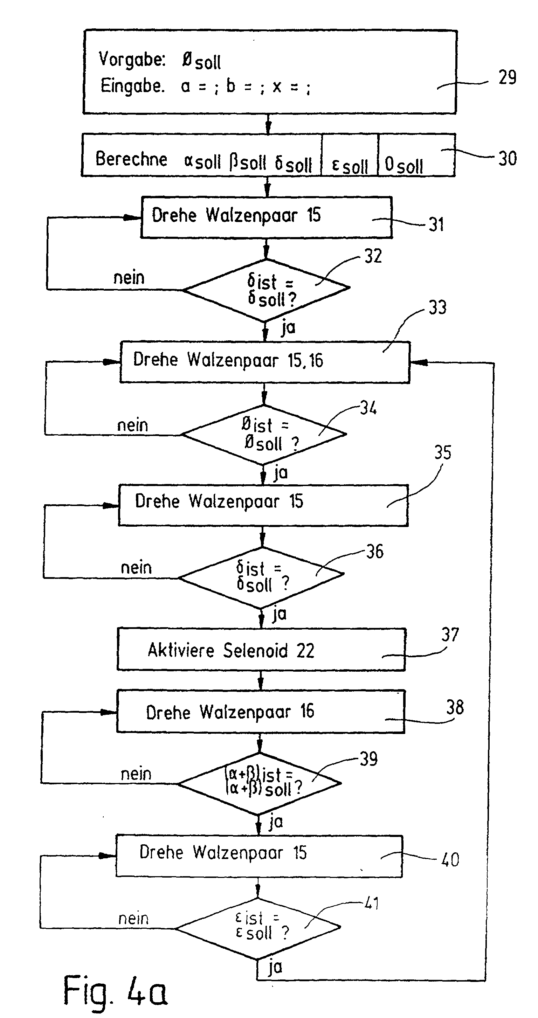

Während im zuvorbeschriebenen Fall beide Walzenpaare 15, 16 kontinuierlich - wenn auch mit unterschiedlichen Winkelgeschwindigkeiten - drehen, beruht die in Fig.4 dargestellt Ausführungsform der erfindungsgemäßen Vorrichtung auf einem Verfahren, bei dem beide Walzenpaare 15, 16 intermittierend, also schrittweise, angetrieben werden. Die beiden Walzenpaare 15, 16 sind in einem Abstand x voneinander angeordnet, der kleiner ist als das Zweifache der Länge a der Abschnitte 4.

Wie im vorhergehenden Beispiel wird auch hier der Rechen/Regeleinrichtung 19 über eine Eingabeeinrichtung die Information über die Größen a und b zugeleitet. Den Größen a und b, projiziert auf den Umfang der Walzen 15a, 15b, 16a, 16b, entsprechen gewisse Drehwinkel α und β der Walzen 15a, 15b, 16a, 16b der beiden Walzenpaare 15, 16. Die Drehung der Walzenpaare 15, 16 erfolgt über die Antriebe 17, 18. Die Information hinsichtlich der zurückgelegten Drehwinkel wird der Rechen-/Regeleinrichtung 19 über die Drehwinkelgeber 21, die an den Achsen der Walzen 15a, 16a angeordnet sind, geliefert.

In Fig. 4a ist ein Flußdiagramm zur schrittweisen Ansteuerung der Walzenpaare 15, 16 dargestellt. Unter Punkt 29 werden der Sollwert für den Drehwinkel Φ, sowie die Werte für die Länge a eines Abschnitts 4, für den Abstand b zwischen zwei aufeinanderfolgenden Abschnitten 4 und für den Abstand x der beiden Walzenpaare 15,16 eingegeben. Anhand dieser eingegebenen Werte ermittelt die Rechen-/Regeleinrichtung 19 unter Programmpunkt 30 die zugehörigen Drehwinkel α, β und δ einer der Walzen 15a, 15b, 16a, 16b der Walzenpaare 15, 16, sowie die den Strecken (2·a-x) und (x-a) entsprechenden Drehwinkel σ und ε. Gemäß den Programmpunkten 31 und 32 wird nun das Walzenpaar 15 um den Winkel δ gedreht. Bei 33 und 34 werden beide Walzenpaare 15, 16 um denselben Winkel Φ weitergedreht. Bei diesem Winkel handelt es sich um einen vernachlässigbar kleinen Winkelbetrag, der bei den folgenden Überlegungen nicht mehr berücksichtigt wird. Die Drehung der beiden Walzenpaare 15, 16 um den Winkel Φ soll lediglich sicherstellen, daß das Ende des Bandmaterials 3 fest von dem Spalt zwischen den Walzen 16a, 16b des Walzenpaares 16 ergriffen wird. Anschließend wird gemäß den Programmpunkten 35 und 36 das Walzenpaar 15 um den Winkel σ gedreht. Dieser Drehwinkel entspricht der Strecke (2·a-x). Nach Ausführung dieser Verfahrensschritte weist das Bandmaterial 3 die gewünschte Krümmung auf und wird in das spitzwinklige Element 23 hineingedrückt. Bei 37 betätigt die Rechen/Regeleinrichtung 19 den Selenoid 25, der die Schneide 24 in Richtung der Spitze des spitzwinkligen Elements 23 bewegt und das Bandmaterial 3 durchtrennt. Bei den Programmpunkten 38 und 39 wird das Walzenpaar 16 um den Winkel (α+β) gedreht. Nachfolgend wird in einem weiteren Programmschritt - Punkt 40 und 41 - das Walzenpaar 15 um den Winkel ε weitergedreht. Dieser Winkel entspricht der Strecke (x-a). Sobald diese Programmpunkte durchlaufen sind, springt das Programm auf Punkt 33 zurück; der nächste Zyklus wird gestartet.

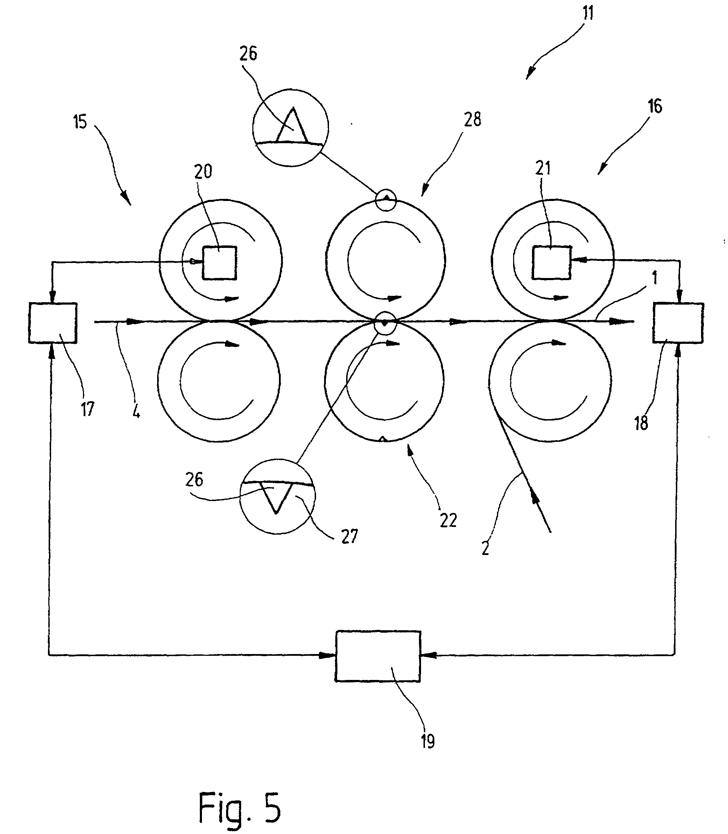

In Fig.5 ist eine dritte Ausführungsform der erfindungsgemäßen Vorrichtung 11 dargestellt. Diese Ausführungsform unterscheidet sich von der in Fig.4 gezeigten u.a. durch den Mechanismus 22 zur Unterteilung des halbhart- oder hartmagnetischen Bandmaterials 3. Bei dieser Ausführungsform sind Schneide 24 und Selenoid 25 durch das weitere Walzenpaar 28 ersetzt, wobei auf dem Mantel einer der beiden Walzen 28a, 28b des Walzenpaares 28 eine Ausbuchtung 26 und in dem Mantel der anderen Walze 28b, 28a eine komplementäre Ausnehmung 27 vorgesehen sind. Der Abstand b zwischen zwei aufeinanderfolgenden Abschnitten 4 wird - ebenso wie im Falle der Ausführungsform, die in Fig.3 gezeigt ist - durch eine unterschiedliche Drehgeschwindigkeit der beiden Walzenpaare 15, 16 erreicht. Bei dieser Vorrichtung ist es besonders günstig, die Drehgeschwindigkeit des Walzenpaares 28 an die Drehgeschwindigkeit des Walzenpaares 15 zu koppeln.

### Bezugszeichenliste

- 1: deaktivierbares Sicherungsstreifen
- 2: weichmagnetisches Bandmaterial
- 3: halbhart- oder hartmagnetisches Bandmaterial
- 4: halbhart- oder hartmagnetischer Abschnitt
- 5: Rolle
- 6: Rolle
- 7: Puffereinrichtung
- 8: Puffereinrichtung
- 9: Umlenkwalze
- 10: Klebstoff-Zuführeinrichtung
- 11: Vorrichtung zur Herstellung von Sicherungsstreifen
- 12: Trockner
- 13: Puffereinrichtung
- 14: Rolle
- 15: erstes Walzenpaar
- 16: zweites Walzenpaar
- 16a: Walze des zweiten Walzenpaares 16
- 16b: Walze des zweiten Walzenpaares 16
- 17: Antrieb
- 18: Antrieb
- 19: Rechen-/Steuervorrichtung
- 20: Drehwinkelgeber
- 21: Drehwinkelgeber
- 22: Mechanismus
- 23: spitzwinkliges Element
- 24: Schneide
- 25: Selenoid
- 26: Ausbuchtung
- 27: Ausnehmung
- 28: weiteres Walzenpaar
- 28a: Walze des Walzenpaares 28
- 28b: Walze des Walzenpaares 28

## Patentansprüche

1. Verfahren zur Herstellung von deaktivierbaren Sicherungsstreifen, insbesondere für die Artikelsicherung in Warenhäusern, wobei ein deaktivierbarer Sicherungsstreifen aus einem weichmagnetischen Bandmaterial besteht, auf das in definierten Abständen Abschnitte bestimmter Länge aus einem halbhart- oder hartmagnetischen Material aufgebracht sind,
wobei ein halbhart- oder hartmagnetisches Bandmaterial (3) in vorgegebenen Abständen in einzelne Abschnitte (4) unterteilt wird,
wobei die Unterteilung des halbhart- oder hartmagnetischen Bandmaterials (3) derart erfolgt, daß es in einem vorgegebenen Abstand gekrümmt und im Bereich der stärksten Krümmung in einzelne Abschnitte (4) unterteilt wird, und
wobei die hart- oder hartmagnetischen Abschnitte (4) sukzessive in einem definierten Abstand voneinander auf das weichmagnetische Bandmaterial (2) aufgebracht werden,
**dadurch gekennzeichnet,**
**daß** ein sprödes, halbhart- oder hartmagnetisches Bandmaterial (3) verwendet wird, wobei die Krümmung derart bemessen wird, daß das Bandmaterial (3) aufgrund seiner Sprödigkeit im Bereich der stärksten Krümmung bricht.

2. Verfahren nach Anspruch 1,
**dadurch gekennzeichnet,**
**daß** die Unterteilung des halbhart- oder hartmagnetischen Bandmalerials (3) intermittierend erfolgt.

3. Verfahren nach Anspruch 1 oder 2,
**dadurch gekennzeichnet,**
**daß** das unterteilen des halbhart- oder hartmagnetischen Bandmaterials (3) in einzelne Abschnitte (4) im Bereich der stärksten Krümmung durch ein Hilfsmittel (24; 28) unterstützt wird.

4. Verfahren nach Anspruch 1,
**dadurch gekennzeichnet,**
**daß** die halbhart- oder hartmagnetische Abschnitte (4) nachfolgend unmittelbar auf das weichmagnetische Bandmaterial (2) aufgebracht werden.

5. Vorrichtung zur Herstellung eines deaktivierbaren Sicherungsstreifens, insbesondere für die Artikelsicherung in Warenhäusern, wobei der deaktivierbare Sicherungsstreifen aus einem weichmagnetischen Bandmaterial besteht, auf das in definiertem Abstand Abschnitte bestimmter Länge aus einem halbhart- oder hartmagnetischen Material aufgebracht sind, wobei
zumindest ein erstes Walzenpaar (15) und ein zweites Walzenpaar (16) vorgesehen sind, die in einem bestimmten Abstand voneinander angeordnet sind,
jedem der Walzenpaare (15, 16) ein steuerbarer Antrieb (17, 18) zugeordnet ist, und
eine Rechen-/Regelvorrichtung (19) vorgesehen ist, die die Walzenpaare (15, 16) derart antreibt, daß das halbhart- oder hartmagnetische Bandmaterial (3) in einzelne Abschnitte (4) unterteilt wird und die halbhart- oder hartmagnetischen Abschnitte (4) sukzessive in einem definierten Abstand voneinander auf das weichmagnetische Bandmaterial (2) aufgebracht werden,
**dadurch gekennzeichnet,**
**daß** der Abstand (x) zwischen den beiden Walzenpaaren (15, 16) kleiner ist als die doppelte Länge (a) eines halbhart- oder hartmagnetischen Abschnittes (4) und daß die Rechen/Regelvorrichtung (19) die beiden Walzenpaare (15, 16) derart antreibt, daß durch die Verwendung eines spröden, halbhart- oder hartmagnetischen Bandmaterials (3) dieses zwischen den beiden Walzenpaaren (15, 16) derart stark gebogen wird, daß es im Bereich der stärksten Krümmung bricht.

6. Vorrichtung nach Anspruch 5,
**dadurch gekennzeichnet,**
**daß** zur Unterteilung des halbhart- oder hartmagnetischen Bandmaterials (3) in einzelne Abschnitte (4) ein Mechanismus (26,27) an dem ersten Walzenpaar (15) vorgesehen ist und
**daß** die Rechen-/Regelvorrichtung (19) die relative Drehgeschwindigkeit der beiden Walzenpaare (15, 16) derart bemißt, daß zwischen den halbhart- oder hartmagnetischen Abschnitten (4) der gewünschte Abstand liegt.

7. Vorrichtung nach Anspruch 5,
**dadurch gekennzeichnet,**
**daß** die Rechen-/Regelvorrichtung (19) die Antriebe (17, 18) der beiden Walzenpaare (15, 16) sukzessive in folgenden Schritten beaufschlagt:
das erste Walzenpaar (15) wird beaufschlagt, bis das halbhart- oder hartmagnetische Bandmaterial (3) den Spalt zwischen den beiden Walzen (16a, 16b) des zweiten Walzenpaares (16) erreicht;
beide Walzenpaare (15, 16) werden beaufschlagt, bis das halbhart- oder hartmagnetische Bandmaterial (3) in dem Spalt zwischen den beiden Walzen (16a, 16b) des zweiten Walzenpaares (16) ergriffen wird;
das erste Walzenpaar (15) wird beaufschlagt, bis das halbhart- oder hartmagnetische Bandmaterial (3) zwischen den beiden Walzenpaaren (15, 16) eine gewünschte Krümmung aufweist und getrennt wird;
das zweite Walzenpaar (16) wird beaufschlagt, bis der gewünschte Abstand zwischen zwei aufeinanderfolgenden Abschnitten (4) erreicht ist.

8. Vorrichtung nach Anspruch 7,
**dadurch gekennzeichnet,**
**daß** ober- oder unterhalb des Bereiches zwischen zwei aufeinanderfolgenden Walzenpaaren (15, 16) ein spitzwinkliges Element (23) vorgesehen, in das das gekrümmte halbhart- oder hartmagnetische Bandmaterial (3) von einer Schneide (24) hineingedrückt wird.

9. Vorrichtung nach Anspruch 8,
**dadurch gekennzeichnet,**
**daß** die Schneide (24) mittels eines Solenoids (25) betätigbar ist.

10. Vorrichtung nach Anspruch 5, 6 oder 7,
**dadurch gekennzeichnet,**
**daß** als Mechanismus zur Unterteilung des halbhart- oder hartmagnetischen Bandmaterials (3) zwischen den beiden Walzenpaaren (15, 16) ein weiteres Walzenpaar (28) vorgesehen ist, wobei eine der beiden Walzen (28a, 28b) dieses Walzenpaares (28) zumindest eine Ausbuchtung (26) und die andere der beiden Walzen (28b, 28a) des Walzenpaares (28) eine dazu komplementäre Ausnehmung (27) aufweist, die die Krümmung des halbhart- oder hartmagnetischen Bandmaterials (3) bewirken.

## Claims

1. A method of manufacturing deactivatable security tags, in particular for the protection of articles in department stores, in which a deactivatable security tag is comprised of a soft magnetic web material having applied to it at defined relative distances sections of predetermined length made of a semi-hard or hard magnetic material,
in which a semi-hard or hard magnetic web material (3) is subdivided into individual sections (4) at predetermined relative distances,
in which the step of subdividing the semi-hard or hard magnetic web material (3) is effected such that the material is bent at a predetermined distance and subdivided into individual sections (4) in the area of the severest bend, and
in which the semi-hard or hard magnetic sections (4) are successively applied to the soft-magnetic web material (2) at a defined relative distance,
**characterized by** the use of a brittle, semi-hard or hard magnetic web material (3) in which the bend is calculated such that the web material (3) breaks due to its brittleness in the area of the severest bend.

2. The method as claimed in claim 1,
**characterized in that** the step of subdividing the semi-hard or hard magnetic web material (3) is effected intermittently.

3. The method as claimed in claim 1 or 2,
**characterized in that** the step of subdividing the semi-hard or hard magnetic web material (3) into individual sections (4) is supported by an auxiliary device (24; 28) in the area of the severest bend.

4. The method as claimed in claim 1,
**characterized in that** the semi-hard or hard magnetic sections (4) are successively applied directly to the soft magnetic web material (2).

5. A device for manufacturing a deactivatable security tag, in particular for the protection of articles in department stores, in which the deactivatable security tag is comprised of a soft magnetic web material having applied to it at defined relative distances sections of predetermined length made of a semi-hard or hard magnetic material,
in which provision is made for at least one first pair of rolls (15) and one second pair of rolls (16) spaced from each other by a predetermined distance,
in which said pairs of rolls (15, 16) are each associated with a respective controllable drive mechanism (17, 18), and
in which provision is made for a computing/control device (19) driving the pairs of rolls (15, 16) in such fashion that the semi-hard or hard magnetic web material (3) is subdivided into individual sections (4) and said semi-hard or hard magnetic sections (4) are successively applied to the soft magnetic web material (2) at a defined relative distance,
**characterized in that** the relative distance (x) of the two pairs of rolls (15, 16) is shorter than double the length (a) of a semi-hard or hard magnetic section (4), and that the computing/control device (19) drives the two pairs of rolls (15, 16) in such fashion that, owing to the use of a brittle, semi-hard or hard magnetic web material (3), said web material is exposed to such high bending loads between the two pairs of rolls (15, 16) that it breaks in the area of the severest bend.

6. The device as claimed in claim 5,
**characterized in that** a mechanism (26, 27) is provided on the first pair of rolls (15) for subdividing the semi-hard or hard magnetic web material (3) into individual sections (4), and that the computing/control device (19) calculates the relative rotational speed of the two pairs of rolls (15, 16) such as to ensure the desired distance between the semi-hard or hard magnetic sections (4).

7. The device as claimed in claim 5,
**characterized in that** the computing/control device (19) operates on the drive mechanisms (17, 18) of the two pairs of rolls (15, 16) successively in the following steps:
the first pair of rolls (15) is acted upon until the semi-hard or hard magnetic web material (3) reaches the gap between the two rolls (16a, 16b) of the second pair of rolls (16);
both pairs of rolls (15, 16) are acted upon until the semi-hard or hard magnetic web material (3) is seized in the gap between the two rolls (16a, 16b) of the second pair of rolls (16);
the first pair of rolls (15) is acted upon until the semi-hard or hard magnetic web material (3) is bent to the desired degree between the two pairs of rolls (15, 16) and is severed; and
the second pair of rolls (16) is acted upon until the desired distance between two successive sections (4) is reached.

8. The device as claimed in claim 7,
**characterized in that** above or below the area between two successive pairs of rolls (15, 16) provision is made for an acute-angled element (23) into which the bent semi-hard or hard magnetic web material (3) is forcibly urged by a blade (24).

9. The device as claimed in claim 8,
**characterized in that** the blade (24) is actuatable by means of a solenoid (25).

10. The device as claimed in claim 5, 6 or 7,
**characterized in that** between the two pairs of rolls (15, 16) provision is made for a further pair of rolls (28) serving as a mechanism for subdividing the semi-hard or hard magnetic web material (3), wherein one of the two rolls (28a, 28b) of said pair of rolls (28) has at least one protuberance (26) while the other one of the two rolls (28b, 28a) of said pair of rolls (28) has a complementary indentation (27) to effect bending of the semi-hard or hard magnetic web material (3).

## Revendications

1. Procédé de fabrication de rubans antivol désactivables, plus particulièrement destinés à la protection antivol des articles dans les grands magasins, le ruban antivol désactivable étant constitué d'une matière électromagnétique souple sur laquelle des segments (4) d'une bande de matière électromagnétique rigide ou semi-rigide (3) sont appliqués à intervalles prédéfinis, l'application de la bande de matière électromagnétique rigide ou semi-rigide (3) sur le ruban de matière souple s'opérant en cintrant à intervalles prédéfinis la bande de matière électromagnétique rigide ou semi-rigide, les points de courbure maximale constituant les points de segmentation, la matière électromagnétique rigide ou semi-rigide ayant été choisie en fonction de ses caractéristiques de faible résistance à la rupture, de manière à casser spontanément aux points de courbure maximale, pour constituer les segments successifs appliqués sur le ruban de matière électromagnétique souple.

2. Procédé suivant la revendication 1, **caractérisé en ce qu'**on effectue une segmentation intermittente de la bande de matière électromagnétique rigide ou semi-rigide (3).

3. Procédé selon l'une des revendications 1 ou 2, **caractérisé en ce que** l'on utilise un dispositif auxiliaire (24, 26) chargé de suppléer la cassure spontanée de la bande de matière électromagnétique rigide ou semi-rigide (3) en segments distincts (4) aux points de courbure maximale.

4. Procédé suivant la revendication 1, **caractérisé par** l'application immédiate sur le ruban de matière électromagnétique souple (2) des segments successifs de bande de matière électromagnétique rigide ou semi-rigide (3).

5. Dispositif destiné à la fabrication de rubans antivol désactivables, plus particulièrement destinés à la protection antivol des articles dans les grands magasins, le ruban antivol désactivable étant constitué d'une matière électromagnétique souple sur laquelle des segments (4) d'une bande de matière électromagnétique rigide ou semi-rigide (3) sont appliqués à intervalles prédéfinis, lequel dispositif comporte au moins une première (15) ainsi qu'une deuxième paire de rouleaux (16) montées à une distance donnée l'une de l'autre et associées chacune à un actionneur commandé (17, 18), ainsi qu'un processeur/régulateur (19) chargé de déclencher l'action des paires de rouleaux (15, 16) de manière à sectionner la bande de matière électromagnétique rigide ou semi-rigide (3) en segments (4) appliqués ensuite à intervalles prédéfinis sur le ruban de matière électromagnétique souple (2), la distance entre les deux paires de rouleaux (15, 16) étant inférieure à deux fois la longueur
(a) du segment de bande de matière électromagnétique rigide ou semi-rigide (4), et le processeur/régulateur étant programmé pour actionner les deux paires de rouleaux (15, 16) de manière à ce que la bande de matière électromagnétique rigide ou semi-rigide (3) présentant une faible résistance à la rupture engagée dans ces rouleaux soit cintrée, afin de casser spontanément au point de courbure maximale pour constituer les segments (4) voulus.

6. Dispositif suivant la revendication 5, **caractérisé en ce qu'**il est prévu, aux fins du sectionnement en segments distincts (4) de la bande de matière électromagnétique rigide ou semi-rigide (3), un mécanisme (26, 27) monté sur la première paire de rouleaux (15), d'une part, et l'ajustement de la vitesse de rotation des deux paires de rouleaux (15, 16) par le processeur/régulateur (19) visant à déterminer l'espacement voulu des segments (4) de bande de matière électromagnétique rigide ou semi-rigide, d'autre part.

7. Dispositif selon la revendication 5, **caractérisé en ce que** le processeur/régulateur (19) commande aux actionneurs (17, 18) des deux paires de rouleaux (15, 16) la séquence opératoire suivante:
Actionnement de la première paire de rouleaux (15) jusqu'à ce que la bande de matière électromagnétique rigide ou semi-rigide (3) atteigne le point de passage entre les deux rouleaux (16a et 16b) de la deuxième paire (16);
Actionnement des deux paires de rouleaux (15, 16) jusqu'à ce que la bande de matière électromagnétique rigide ou semi-rigide (3) soit entraînée entre les deux rouleaux (16a et 16b) de la deuxième paire (16);
Actionnement de la première paire de rouleaux (15) jusqu'à ce que la bande de matière électromagnétique rigide ou semi-rigide (3) comprise entre les deux paires de rouleaux (15 et 16) forme la courbure voulue et soit sectionnée;
Actionnement de la deuxième paire de rouleaux (16) jusqu'à ce que la longueur entre deux segments (4) successifs ait été atteinte.

8. Dispositif suivant la revendication 7, **caractérisé par** la présence, au-dessus ou en-dessous des deux paires de rouleaux (15, 16) d'un élément acutangulé (23) dans lequel la bande de matière électromagnétique rigide ou semi-rigide (3) cintrée est poussée par un mécanisme de coupe (24).

9. Dispositif selon la revendication 8, **caractérisé en ce que** le mécanisme de coupe mobile (24) est actionné par un solénoïde (25).

10. Dispositif selon l'une quelconque des revendications 5, 6 ou 7, **caractérisé en ce qu'**il prévoit, aux fins du sectionnement en segments distincts (4) de la bande de matière électromagnétique rigide ou semi-rigide (3), la présence entre les deux paires de rouleaux (15,16) d'une paire de rouleaux additionnelle (28) dont l'un des deux rouleaux (28a, 28b) présente une denture (26) et l'autre une indentation correspondante (27) destinées à produire le cintrage de la bande de matière électromagnétique rigide ou semi-rigide (3) à la courbure voulue.
